Europäisches Patentamt

European Patent Office

Office européen des brevets

(19)

(11) **EP 0 995 170 B1**

(12) **FASCICULE DE BREVET EUROPEEN**

(45) Date de publication et mention
de la délivrance du brevet:
**13.06.2001 Bulletin 2001/24**

(21) Numéro de dépôt: **98938734.5**

(22) Date de dépôt: **10.07.1998**

(51) Int Cl.⁷: **G06T 9/00**

(86) Numéro de dépôt international:
**PCT/FR98/01519**

(87) Numéro de publication internationale:
**WO 99/03067 (21.01.1999 Gazette 1999/03)**

(54) **SIGNAL DE DONNEES D'ANIMATION D'UNE SCENE GRAPHIQUE A OBJET DE QUANTIFICATION, PROCEDE ET DISPOSITIF CORRESPONDANTS**

BEWEGUNGSSIGNALDATEN VON EINEM GRAPHISCHEN SCENE MIT QUANTIFIKATIONOBJEKT, VERFAHREN UND EINRICHTUNG DAFÜR

GRAPHIC SCENE ANIMATION DATA SIGNAL WITH QUANTIZATION OBJECT, CORRESPONDING METHOD AND DEVICE

(84) Etats contractants désignés:
**DE ES GB IT NL SE**

(30) Priorité: **11.07.1997 FR 9709121**

(43) Date de publication de la demande:
**26.04.2000 Bulletin 2000/17**

(73) Titulaires:
• **FRANCE TELECOM**
**75015 Paris (FR)**
• **TELEDIFFUSION DE FRANCE**
**75732 Paris Cédex 15 (FR)**

(72) Inventeur: **SIGNES, Julien**
**F-35700 Rennes (FR)**

(74) Mandataire: **Vidon, Patrice**
**Cabinet Patrice Vidon**
**Le Nobel (Bât. A)**
**Technopôle Atalante**
**2, allée Antoine Becquerel**
**BP 90333**
**35703 Rennes Cedex 7 (FR)**

(56) Documents cités:
• **ROSE K ET AL: "ENTROPY-CONSTRAINED TREE-STRUCTURED VECTOR QUANTIZER DESIGN" IEEE TRANSACTIONS ON IMAGE PROCESSING, vol. 5, no. 2, février 1996, pages 393-398, XP000678941**
• **KOSKI A: "PRIMITIVE CODING OF STRUCTURAL ECG FEATURES" PATTERN RECOGNITION LETTERS, vol. 17, no. 11, 16 septembre 1996, pages 1215-1222, XP000639569**
• **JASINSCHI R S ET AL: "VIDEO COMPRESSION VIA CONSTRUCTS" PROCEEDINGS OF THE INTERNATIONAL CONFERENCE ON ACOUSTICS, SPEECH, AND SIGNAL PROCESSING (ICASSP), DETROIT, MAY 9 - 12, 1995 IMAGE AND MULTI-DIMENSIONAL SIGNAL PROCESSING/ SIGNAL PROCESSING APPLICATIONS DEVELOPMENT, vol. 4, 9 mai 1995, pages 2165-2168, XP000535384 INSTITUTE OF ELECTRICAL AND ELECTRONICS ENGINEERS**

**Description**

Le domaine de l'invention est celui du codage de données représentatives de scènes graphiques animées, en vue de permettre leur restitution, par exemple sur un terminal multimédia. Plus précisément, l'invention concerne la quantification de telles données, de façon à permettre leur stockage et/ou leur transmission.

Par scène graphique, on entend ici l'agencement d'objets graphiques, vidéo et image dans le temps et dans l'espace. De telles scènes graphiques peuvent être en deux ou trois dimensions, et contenir divers types de primitives graphiques.

L'invention trouve des applications dans tous les cas où il est nécessaire de coder les éléments d'une scène graphique. Elle s'applique notamment aux scènes utilisant les formats de description de scènes connus VRML et BIFS, développé dans MPEG-4.

La norme ISO/IEC DIS 14772-1 décrit le format VRML 2.0. Le groupe de normalisation MPEG-4 a défini le format de description de scène appelé BIFS (Binary Format for Scene (format binaire pour scène)), qui s'inspire de VRML 2.0. Le format BIFS est notamment présenté dans "The MPEG-4 Systems Verification Model" (ISO/IEC JTC1/SC29/WG 11-N1693, MPEG 97, avril 1997).

Ce format de description de scène a pour but de décrire les relations spatio-temporelles entre les divers objets graphiques d'une scène. Pour cela, il définit un certain nombre de noeuds, ou objets, représentant toutes les primitives graphiques que l'on veut représenter. Chacun de ces noeuds comprend des champs pré-définis qui représentent les caractéristiques de ces noeuds.

En d'autres termes, le format BIFS permet de transmettre une structure de scène sous la forme d'une description paramétrique, ou un script.

Les scènes graphiques de type BIFS peuvent être utilisées pour la consultation multimédia (services de télé-enseignement, télé-achat, télé-travail), les jeux 3D, les interfaces évoluées de navigation dans les services. En particulier, les applications suivantes peuvent bénéficier de l'invention :

- la consultation sur un réseau du type "Internet" de scènes graphiques de type VRML 2.0, pour lesquelles il est nécessaire de définir un format compact de représentation des données, pour réduire le délai de transmission.
- le stockage de telles scènes sur des supports tels que les CD-Rom.

On connaît déjà un format binaire de représentation de scène pour la norme VRML 2.0, décrit dans le document cité ci-dessus. Pour quantifier les paramètres, l'auteur propose d'envoyer sous forme d'un noeud les paramètres de quantification. Cependant, les paramètres de quantification choisis ne s'appliquent qu'à un nombre très limité de champs. Ceci a pour effet d'imposer la transmission d'un nombre important de champs de façon non quantifiée. Cela limite bien sûr l'efficacité de la compression numérique des données.

L'invention a notamment pour objectif de pallier ces inconvénients de l'état de la technique.

Plus précisément, un objectif de l'invention est de fournir un signal de données, ainsi qu'un procédé et un dispositif pour sa mise en oeuvre, qui permettent de réduire fortement les données nécessaires pour le codage, et donc la transmission et/ou le stockage de scènes graphiques animées, notamment dans des standards tels que VRML et MPEG-4.

Un autre objectif de l'invention est de fournir une technique de codage de données représentatives de scènes graphiques, qui permettent une transmission de scènes sur un réseau à bas débit, et la reconstruction de ces scènes dans des terminaux ne nécessitant pas d'importants moyens matériels ou logiciels.

L'invention a également pour objectif de fournir une telle technique, qui soit efficace avec tout type de scène et tout type d'élément constituant cette scène, sans qu'il soit nécessaire de traiter spécifiquement (c'est-à-dire de façon non quantifiée), certains éléments.

Ces objectifs, ainsi que d'autres qui apparaîtront par la suite, sont atteints selon l'invention à l'aide d'un signal de données d'animation d'une scène graphique, destiné à des moyens de construction d'images pouvant être présentées sur au moins un écran, signal dans lequel ladite scène est décrite sous la forme d'un ensemble d'objets d'animation à chacun desquels on associe au moins un champ de caractérisation définissant un paramètre dudit objet, et comprenant au moins un objet de quantification, dont les champs de caractérisation définissent des règles de quantification de champs de caractérisation desdits objets d'animation, applicables chacune à au moins deux champs de caractérisation distincts, de façon qu'au moins la plupart des champs de caractérisation à valeur numérique desdits objets d'animation puissent être quantifiés.

Ainsi, il est possible de définir un nombre limité de types, ou règles, de quantification, qui couvre tous les cas possibles.

De plus, il est proposé de transmettre les paramètres de quantification en tant qu'objet ou noeud. L'intérêt de transmettre ces paramètres en tant que noeud est de profiter de toutes les fonctionnalités liées à la transmission des noeuds dans un flux de description de scène :

- la déclaration d'un noeud dans la scène équivaut à la déclaration de tous ses champs, avec des valeurs par défaut pré-définies ;
- la déclaration de tout champ permet de redéfinir une autre valeur que la valeur par défaut de ce champ ;
- il est possible d'identifier ce noeud puis de le ré-utiliser dès que cela est nécessaire dans la scène, simplement en indiquant son identifiant.

Préférentiellement, un tel objet de quantification comprend au moins une des règles de quantification appartenant au groupe comprenant :

- règle de quantification d'une position tridimensionnelle ;
- règle de quantification d'une position bidimensionnelle ;
- règle de quantification d'une couleur ;
- règle de quantification d'un texture ;
- règle de quantification d'un angle ;
- règle de quantification d'un changement d'échelle ;
- règle de quantification d'une "clé" (key) d'animation ;
- règle de quantification d'une normale.

De façon avantageuse, chacun desdits objets de quantification comprend un champ booléen de portée, indiquant :

- pour une première valeur, que l'objet de quantification ne s'applique qu'à l'objet suivant;
- pour la seconde valeur, que l'objet de quantification s'applique à tous les objets suivants, jusqu'à ce qu'un nouvel objet de quantification soit rencontré.

Il est ainsi possible de limiter encore le nombre de données nécessaires.

Selon un mode de réalisation préférentiel, pour chaque règle de quantification d'un type de paramètre, on délivre au moins certaines des informations appartenant au groupe comprenant :

- un indicateur de mise en oeuvre ou non de la quantification ;
- une valeur minimale min dudit paramètre ;
- une valeur maximale max dudit paramètre ;
- un nombre de bits (Nb) affectés à la quantification desdits paramètres.

L'invention concerne également un procédé de codage permettant de produire un tel signal. Ce procédé comprend notamment :

- une étape de définition, délivrant au moins un objet de quantification, dont les champs de caractérisation définissent des règles de quantification de champs de caractérisation desdits objets d'animation, applicables chacune à au moins deux champs de caractérisation distincts, de façon qu'au moins la plupart des champs de caractérisation à valeur numérique desdits objets d'animation puissent être quantifiés ; et
- une étape de quantification, assurant la quantification des données propres à chacun desdits champs de caractérisation desdits objets d'animation, en fonction desdites règles de quantification.

Enfin, l'invention concerne encore un dispositif de construction d'images pouvant recevoir ce signal. Il comprend en particulier :

- des moyens de réception d'au moins un objet de quantification, dont les champs de caractérisation définissent des règles de quantification de champs de caractérisation desdits objets d'animation, applicables chacune à au moins deux champs de caractérisation distincts, de façon qu'au moins la plupart des champs de caractérisation à valeur numérique desdits objets d'animation puissent être quantifiés ; et
- des moyens de quantification inverse des données propres à chacun desdits champs de caractérisation desdits objets d'animation, en fonction desdites règles de quantification.

D'autres caractéristiques et avantages de l'invention apparaîtront plus clairement à la lecture de la description suivante, d'un mode de réalisation préférentiel de l'invention, donné à titre d'exemple illustratif et non limitatif, et des dessins annexés, parmi lesquels :

- la figure 1 illustre de façon schématique un terminal pouvant exploiter le signal de l'invention ;
- la figure 2 présente de façon simplifiée le principe de construction d'un signal selon l'invention.

Comme déjà mentionné, MPEG-4 a défini un format de description de scène, le BIFS, inspiré du format VRML 2.0. Le but de ce format de description de scène est de décrire les relations spatio-temporelles entre les objets graphiques d'une scène. Pour cela le format BIFS définit un certain nombre de "noeuds" représentant toutes les primitivs graphiques que l'on veut transmettre. Chacun de ces noeuds a des champs pré-définis qui représentent les caractéristiques de ces noeuds. Par exemple, la primitive Cercle a pour champ "rayon" de type nombre flottant. La primitive "Objet Vidéo" a pour paramètres les temps de début et de fin de cette vidéo.

La description qui suit est faite dans le cadre de MPEG-4. Elle peut cependant aisément être adaptée au langage VRML.

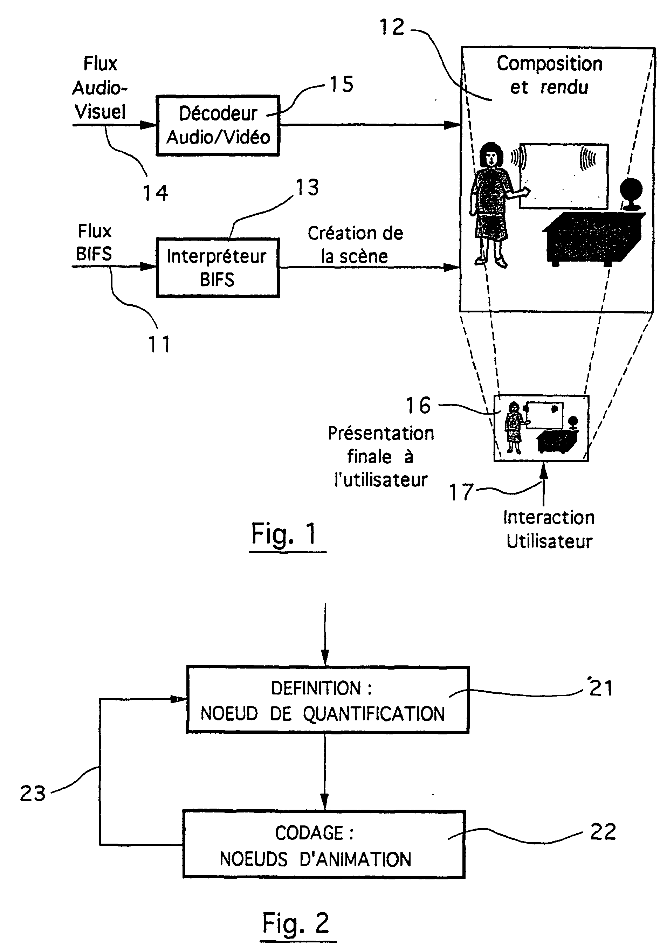

La figure 1 présente un exemple d'application. Dans un premier temps, le terminal MPEG-4 charge la scène graphique 11 décrite dans un format BIFS. La scène est décrite en termes d'objets ou de noeuds. Ces noeuds sont représentés par des champs. Ces champs seront quantifiés grâce aux paramètres de quantification envoyés dans le nouveau noeud décrit par la suite. Ensuite, la scène est construite par l'interpréteur BIFS 13. On tient compte également, pour la composition et le rendu de la scène 12, du flux audiovisuel 14, traité par le décodeur audio-vidéo 15.

On obtient ainsi une image animée 16, présenté à l'utilisateur. Le cas échéant, celui-ci peut intervenir (17), à l'aide d'une interface appropriée.

Une difficulté pour quantifier efficacement les champs des noeuds de description de scène est qu'on dispose d'aucune statistique sur ces champs. De plus, il existe une multitude de champs différents, utilisés avec une fréquence très variable, et il serait donc inefficace de devoir transmettre individuellement les paramètres de quantification pour chaque champ.

Selon l'invention, on regroupe les données à quantifier en 8 grands groupes :

1. les positions 3D ;
2. les positions 2D ;
3. la couleur ;
4. les coordonnées de texture ;
5. les angles ;
6. les paramètres de mise à l'échelle ("scaling") ;
7. les clés d'animation ;
8. les normales.

Ces paramètres sont transmis sous la forme d'un noeud de quantification. Le principe du codage est illustré en figure 2.

On fournit tout d'abord une définition (21) des règles de quantification, sous la forme d'un noeud de quantification, dont un exemple est donné par la suite.

Ensuite, chaque noeud d'animation est quantifié (22), en fonction des règles définies dans le noeud de quantification. Il est bien sûr possible de redéfinir certains des paramètres, ou tous, au cours de la description, en délivrant un nouveau (23) noeud de quantification.

Un tel noeud de quantification peut s'écrire en BIFS :

```
QuantizationParameter {
       Field   SFBool      isLocal           FALSE
       Field   SFVec3f     position3DQuant   TRUE
       Field   SFVec3f     position3DMin     - ∞, - ∞, - ∞
       Field   SFVec3f     position3DMax     + ∞,+ ∞, + ∞
       Field   SFInt32     position3DNbBits  16
       Field   SFVec3f     position2DQuant   TRUE
```

| | | | |
|---|---|---|---|
| Field | SFVec2f | position2DMin | - ∞, - ∞, - ∞ |
| Field | SFVec2f | position2DMax | + ∞,+ ∞, + ∞ |
| Field | SFInt32 | position2DNbBits | 16 |
| Field | SFVec3f | colorQuant | TRUE |
| Field | SFFloat | ColorMin | 0.0 |
| Field | SFFloat | ColorMax | 1.0 |
| Field | SFInt32 | ColorNbBits | 8 |
| Field | SFVec3f | textureCoordinateQuant | TRUE |
| Field | SFFloat | textureCoordinateMin | 0.0 |
| Field | SFFloat | textureCoordinateMax | 1.0 |
| Field | SFInt32 | textureCoordinateNbBits | 16 |
| Field | SFVec3f | angleQuant | TRUE |
| Field | SFFloat | angleMin | 0.0 |
| Field | SFFloat | angleMax | $2\pi$ |
| Field | SFInt32 | angleNbBits | 16 |
| Field | SFVec3f | scaleQuant | TRUE |
| Field | SFFloat | scaleMin | 0.0 |
| Field | SFFloat | scaleMax | + ∞ |
| Field | SFInt32 | scaleNbBits | 8 |
| Field | SFVec3f | keyQuant | TRUE |
| Field | SFFloat | keyMin | 0.0 |
| Field | SFFloat | keyMax | 1.0 |
| Field | SFInt32 | scaleNbBits | 8 |
| Field | SFVec3f | normalQuant | TRUE |
| Field | SFInt32 | normalNbBits | 8 |

}

Le champ "isLocal" est un booléen qui spécifie la portée des paramètres de quantification. Quand il est mis à "TRUE", les paramètres de quantification ne s'appliquent qu'au prochain noeud déclaré. Dans ce cas, les paramètres de quantification utilisés après ce noeud sont ceux qui étaient valables avant la déclaration de ce paramètre. S'il est mis à "FALSE", ces paramètres de quantification s'appliquent à tous les noeuds jusqu'à déclaration d'un nouveau noeud de quantification.

Pour chacun des groupes de paramètres cités ci-dessus, on enverra :

- un booléen pour dire si on quantifie ou non. Si mis à "TRUE" (valeur par défaut), les paramètres de quantification seront pris en compte pour ce type de valeur. Au cas où sa valeur est mise à "FALSE", on transmettra ce type de valeur dans le type original du champ, sans quantification.
- la valeur minimale du paramètre. Pour les positions 2D et 3D, cela correspond à des valeurs vectorielles. Ceci permet en particulier de spécifier une boite englobante dans laquelle les coordonnées varient. Pour les autres types de champs, des valeurs scalaires sont spécifiées. Pour les couleurs, les paramètres de scaling, et les coordonnées de texture qui sont des valeurs vectorielles, on donne la variation pour une seule des coordonnées.

- le nombre de bits sur lesquels sont transmis les champs est également spécifié.

Seules les normales ne nécessitent pas le champ min et max, car une normale peut toujours être représentée par un vecteur quelconque sur toute la sphère unité.

Dans les autres cas, la quantification peut s'effectuer de la façon suivante :

Soit une valeur v à quantifier. Soit Nb le nombre de bits alloués, $V_{min}$ sa valeur minimale, $V_{max}$ sa valeur maximale. Soit enfin $v_q$ sa valeur quantifiée.

A la quantification, on utilisera la formule :

$$v_q = \left[ \frac{(v - v_{min})}{(v_{max} - v_{min})} 2^{N_b} \right]$$

Pour la quantification inverse, on utilisera :

$$\hat{v} = v_{min} + \frac{(v_{max} - v_{min})}{2^{N_b}} v_q$$

On précise maintenant le cas particulier de certains types de champs :

Positions et couleurs

Pour une plus grande efficacité de compression, les couleurs et les positions pourront utiliser une quantification vectorielle. Dans ce cas, les paramètres de positions et de couleur données dans le noeud QuantizationParameter pourront être pris en compte pour recaler la boite englobante sur laquelle s'effectue la quantification vectorielle et celle spécifiée par les paramètres de quantification. En particulier, la quantification vectorielle en lattice D3 sera particulièrement adaptée pour les couleurs et les positions 3D, alors que les positions 2D ou de texture pourront utiliser la quantification vectorielle en lattice D2.

Alternativement, tout autre schéma de quantification pourra être utilisé pour ces champs. Par exemple, on peut quantifier uniformément les trois composantes du vecteur 3D ou 2D résultant.

Normales et des axes de rotation

Pour les normales, un schéma tel que celui décrit dans "MPEG 1996 proposal M1236, Geometry Compression", par Franck Bossen, peut être adopté. Cette technique consiste à découper la sphère unité en 8 octants, puis chaque octant en 3 quadrilatères, sur lesquels on peut quantifier uniformément sur une grille régulière. Le paramètre normalNbBits indique donc qu'on représentera la valeur de la normale sur une grille carrée régulière de 2normalNbBits éléments de coté. On représentera donc les normales en fait sur normalNbBits+3+2 bits.

Alternativement, tout autre schéma de quantification pourra être utilisé pour ces champs. Par exemple, on peut quantifier uniformément les trois composantes du vecteur 3D résultant.

Champs de type SFRotation

Dans la norme VRML 2.0 et le format BIFS, les champs de type SFRotation se composent de quatre flottants qui spécifient un axe de rotation pour les trois premiers et un angle ; Pour ce champ, il est proposé d'appliquer la quantification des normales pour l'axe de rotation, et celle des angles pour la quatrième valeur d'angle.

Comme annoncé, l'efficacité de la syntaxe de représentation du noeud de quantification réside notamment dans le fait que tous ses paramètres peuvent s'appliquer.

En particulier, on groupera les paramètres suivants :

0 - Les positions 3D :
Ces paramètres affectent toutes les positions 3D, les paramètres de translation dans les noeuds Transform, ainsi que les paramètres de distance 3D, taille des primitives 3D (cercle, cône,..). Pour les distances 3D, on pourra intrepréter les paramètres de la manière suivante :

$$d_{min} = 0.0$$

$$d_{max} = \sqrt{(x_{min} - x_{max})^2 + (y_{min} - y_{max})^2 + (z_{min} - z_{max})^2}$$

1 - Les positions 2D :
    Idem pour le 2D
2 - La couleur :
    Tous les paramètres de couleur, de transparence ou de brillance, de lumière.
3 - Les coordonnées de texture :
    Les champs de coordonnées de texture
4 - Les angles :
    Les champs de rotation, de "crease" angle.
5 - Les paramètres d'échelle (scaling) :
    Paramètres de scaling des noeuds "Transform".
6 - Les paramètres de clé (key) d'animation :
    Ceci permet de quantifier les paramètres key de tous les noeuds de type "Interpolator".
7 - Les normales :
    Ceci permet de quantifier tous les paramètres de normales des "IndexedFaceSet" mais aussi tous les axes de rotations.

Un intérêt de déclarer les paramètres de quantification en tant que noeud du langage de description de scène est qu'il est possible de garder la même syntaxe pour la transmission des noeuds. Il est en particulier possible d'avoir plusieurs noeuds de quantification et de les réutiliser adéquatement dans la scène, pour certains des noeuds.

L'exemple ci dessous illustre ces possibilités :

```
DEF Q1 QuantizationParameter
{
        colorIsOriginal        TRUE
        isLocal                TRUE
}
DEF Q2 QuantizationParameter
{
        position3Dmin              -5 -5 -5
        position3Dmax               5  5  5
        positon3DNbBits             8
        colorNbBits                 6
}
Transform
{
        translation 10 10 10
        children [
        Shape{
                                geometry  Cube { }
                                appearance Appearance{
                                        DEF Mat material Material{
                                                emissiveColor 1 0 0
                                        }
                                }
        QuantizationParameter USE Q1
        Shape{
                                geometry  Cone { }
```

```
                                    appearance Appearance{
                                        DEF Mat material Material{
                                            emissiveColor 0 1 0
                                        }
                                    }
                Shape{
                                    geometry  Sphere { }
                                    appearance Appearance{
                                        DEF Mat material Material{
                                            emissiveColor 0 0 1
                                        }
                                    }
                    ]
                }
```

**Revendications**

1.  Signal de données d'animation d'une scène graphique, destiné à des moyens de construction d'images pouvant être présentées sur au moins un écran, signal dans lequel ladite scène est décrite sous la forme d'un ensemble d'objets d'animation à chacun desquels on associe au moins un champ de caractérisation définissant un paramètre dudit objet,
    caractérisé en ce qu'il comprend au moins un objet de quantification, dont les champs de caractérisation définissent des règles de quantification de champs de caractérisation desdits objets d'animation, applicables chacune à au moins deux champs de caractérisation distincts, de façon qu'au moins la plupart des champs de caractérisation à valeur numérique desdits objets d'animation puissent être quantifiés.

2.  Signal selon la revendication 1, caractérisé en ce qu'un objet de quantification comprend au moins une des règles de quantification appartenant au groupe comprenant :

    -   règle de quantification d'une position tridimensionnelle ;
    -   règle de quantification d'une position bidimensionnelle ;
    -   règle de quantification d'une couleur ;
    -   règle de quantification d'un texture ;
    -   règle de quantification d'un angle ;
    -   règle de quantification d'un changement d'échelle ;
    -   règle de quantification d'une "clé" (key) d'animation ;
    -   règle de quantification d'une normale.

3.  Signal selon l'une quelconque des revendications 1 et 2, caractérisé en ce que chacun desdits objets de quantification comprend un champ booléen de portée, indiquant :

    -   pour une première valeur, que l'objet de quantification ne s'applique qu'à l'objet suivant;
    -   pour la seconde valeur, que l'objet de quantification s'applique à tous les objets suivants, jusqu'à ce qu'un nouvel objet de quantification soit rencontré.

4.  Signal selon l'une quelconque des revendications 1 à 3, caractérisé en ce que, pour chaque règle de quantification d'un type de paramètre, on délivre au moins certaines des informations appartenant au groupe comprenant :

- un indicateur de mise en oeuvre ou non de la quantification ;
- une valeur minimale min dudit paramètre ;
- une valeur maximale max dudit paramètre ;
- un nombre de bits (Nb) affectés à la quantification desdits paramètres.

**5.** Procédé de codage de données d'animation d'une scène graphique, destiné à des moyens de construction d'images pouvant être présentées sur au moins un écran,' ladite scène étant décrite sous la forme d'un ensemble d'objets d'animation à chacun desquels on associe au moins un champ de caractérisation définissant un paramètre dudit objet,

caractérisé en ce qu'il comprend :

- une étape de définition, délivrant au moins un objet de quantification, dont les champs de caractérisation définissent des règles de quantification de champs de caractérisation desdits objets d'animation, applicables chacune à au moins deux champs de caractérisation distincts, de façon qu'au moins la plupart des champs de caractérisation à valeur numérique desdits objets d'animation puissent être quantifiés ; et
- une étape de quantification, assurant la quantification des données propres à chacun desdits champs de caractérisation desdits objets d'animation, en fonction desdites règles de quantification.

**6.** Dispositif de construction d'images pouvant être présentées sur au moins un écran, ladite scène étant décrite sous la forme d'un ensemble d'objets d'animation à chacun desquels on associe au moins un champ de caractérisation définissant un paramètre dudit objet,

caractérisé en ce que lesdits moyens de reconstruction comprennent :

- des moyens de réception d'au moins un objet de quantification, dont les champs de caractérisation définissent des règles de quantification de champs de caractérisation desdits objets d'animation, applicables chacune à au moins deux champs de caractérisation distincts, de façon qu'au moins la plupart des champs de caractérisation à valeur numérique desdits objets d'animation puissent être quantifiés ; et
- des moyens de quantification inverse des données propres à chacun desdits champs de caractérisation desdits objets d'animation, en fonction desdites règles de quantification.

**Claims**

**1.** Data signal for animation of a graphic scene to be used by means (13) for constructing images that can be displayed (16) on at least one screen, a signal in which the said scene is described in the form of a set of animation objects (22), each of which is associated with at least one characterization field defining a parameter of the said object,

characterized in that it comprises at least one quantization object (21), for which the characterization fields define the quantization rules for the characterization fields of the said animation objects (22), each applicable to at least two distinct characterization fields, such that most or all of the characterization fields of the said animation objects (22) with a numerical value can be quantized.

**2.** Signal according to claim 1, characterized in that a quantization object (21) includes at least one of the quantization rules belonging to the group comprising:

- quantization rule for a three-dimensional position;
- quantization rule for a two-dimensional position;
- quantization rule for a colour;
- quantization rule for a texture;
- quantization rule for an angle;
- quantization rule for a scale change;
- quantization rule for an animation "key"; quantization rule for a normal.

**3.** Signal according to either of claims 1 and 2,

characterized in that each of the said quantization objects (21) comprises a Boolean range field, indicating:

- for a first value, that the quantization object is only applicable to the next object;

- for the second value, that the quantization object is applicable to all subsequent objects, until a new quantization object is found.

4. Signal according to any one of claims 1 to 3, characterized in that at least some of the items of information belonging to the group comprising the following may be produced for each rule for quantization of a parameter type:

   - a flag stating whether or not the quantization is to be used;
   - a minimum value (min) of the said parameter;
   - a maximum value (max) of the said parameter;
   - a number of bits (Nb) assigned to quantization of the said parameters.

5. Process for coding animation data for a graphic scene, to be used by image construction means (13) that may be displayed (16) on at least one screen, the said scene being described in the form of a set of animation objects (22) each of which is associated with at least one characterization field defining a parameter of the said object, characterized in that it comprises:

   - a definition step (21), outputting at least one quantization object in which the characterization fields define rules for quantization of characterization fields of the said animation objects, each applicable to at least two distinct characterization fields, such that most or all of the characterization fields with a numeric value of the said animation objects may be quantized; and
   - a quantization step (22) quantizing data specific to each of the said characterization fields of the said animation objects as a function of the said quantization rules.

6. Device for the construction of images that can be displayed (16) on at least one screen, the said scene being described in the form of a set of animation objects (22) each of which is associated with at least one characterization field defining a parameter of the said object, characterized in that it comprises:

   - means of reception of at least one quantization object, for which the characterization fields define the rules for quantization of the characterization fields of the said animation objects, each applicable to at least two distinct characterization fields, such that most characterization fields of the said animation objects with a numeric value may be quantized; and
   - inverse quantization means for data specific to each of the said characterization fields of the said animation objects, as a function of the said quantization rules.

**Patentansprüche**

1. Datensignale für die Animation einer graphischen Szene, für Mittel zum Erstellen von Bildern, die auf. mindestens einem Bildschirm dargestellt werden können, wobei im Signal die Szene in Form einer Menge von Animationsobjekten beschrieben wird, wobei eines jeden dieser Objekte mindestens ein Kennzeichnungsfeld zugeordnet wird, welches ein Parameter dieses Objektes definiert, dadurch gekennzeichnet, daß es mindestens ein Quantifizierungsobjekt umfaßt, dessen Kennzeichnungsfelder Quantifizierungsregeln für Kennzeichnungsfelder dieser Animationsobjekte definieren, die jeweils auf mindestens zwei verschiedene Kennzeichnungsfelder anwendbar sind, so daß mindestens die Mehrzahl der Kennzeichnungsfelder dieser Animationsobjekte, die einen numerischen Wert aufweisen, quantifiziert werden können.

2. Signal nach Anspruch 1, dadurch gekennzeichnet, daß ein Quantifizierungsobjekt mindestens eine Quantifizierungsregel aus der Gruppe enthält, welche folgendes umfaßt:

   - Quantifizierungsregel einer dreidimensionalen Position;
   - Quantifizierungsregel einer zweidimensionalen Position;
   - Quantifizierungsregel einer Farbe;
   - Quantifizierungsregel eines Gefüges;
   - Quantifizierungsregel eines Winkels;.
   - Quantifizierungsregel eines Maßstabwechsels;
   - Quantifizierungsregel eines "Animationsschlüssels" (Key);

- Quantifizierungsregel einer Normalen.

3. Signal nach einem der Ansprüche 1 und 2,
dadurch gekennzeichnet, daß ein jedes der Quantifizierungsobjekte ein boolesches Reichweitenfeld umfaßt, welches folgendes angibt:

- daß für einen ersten Wert, das Quantifizierungsobjekt nur auf das nachfolgende Objekt anwendbar ist;
- daß für einen zweiten Wert, das Quantifizierungsobjekt auf alle nachfolgenden Objekte anwendbar ist, bis ein neues Quantifizierungsobjekt getroffen wird.

4. Signal nach einem der Ansprüche 1 bis 3,
dadurch gekennzeichnet, daß für jede Quantifizierungsregel eines bestimmten Parametertyps, mindestens einige Informationen aus der Gruppe herausgegeben werden, die folgendes umfaßt:

- einen Indikator für das Anwenden oder Nicht-Anwenden der Quantifizierung;
- einen Minimalwert min dieses Parameters;
- einen Maximalwert max dieses Parameters;
- eine Zahl von Bits (Nb), die der Quantifizierung dieser Parameter zugeordnet sind.

5. Verfahren zum Kodieren von Animationsdaten einer graphischen Szene für Mittel zum Herstellen von Bildern, die auf mindestens einem Bildschirm dargestellt werden können, wobei die Szene in der Form einer Menge von Animationsobjekten beschrieben wird, wobei eines jeden dieser Objekte mindestens ein Kennzeichnungsfeld zugeordnet wird, welches ein Parameter dieses Objektes definiert,
dadurch gekennzeichnet, daß es folgendes umfaßt:

- einen Definitionsschritt, der mindestens ein Quantifizierungsobjekt ergibt, dessen Kennzeichnungsfelder Quantifizierungsregeln dieser Animationsobjekte definieren, welche jeweils auf mindestens zwei verschiedene Kennzeichnungsfelder anwendbar sind, so daß mindestens die Mehrzahl der Kennzeichnungsfelder dieser Animationsobjekte, welche einen numerischen Wert aufweisen, quantifiziert werden können, und
- ein Quantifizierungsschritt, der die Quantifizierung der Daten.sicherstellt, die einem jeden der Kennzeichnungsfelder dieser Animationsobjekte eigen sind, als Funktion der Quantifizierungsregeln.

6. Anordnung zum Herstellen von Bildern, die auf mindestens einem Bildschirm dargestellt werden können, wobei die Szene in Form einer Menge von Animationsobjekten beschrieben wird, wobei eines jeden dieser Objekte mindestens ein Kennzeichnungsfeld zugeordnet wird, welches ein Parameter dieses Objektes definiert,
dadurch gekennzeichnet, daß die Wiederherstellungsmittel folgendes umfassen:

- Mittel zum Empfang von mindestens einem Quantifizierungsobjekt, dessen Kennzeichnungsfelder Quantifizierungsregeln der Kennzeichnungsfelder definieren, die jeweils auf mindestens zwei verschiedene Kennzeichnungsfelder anwendbar sind, so daß mindestens die Mehrzahl der Kennzeichnungsfelder dieser Animationsobjekte, die einen numerischen Wert aufweisen, quantifiziert werden können, und
- Mittel zur inversen Quantifizierung der Daten, die einem jeden der Kennzeichnungsfelder dieser Animationsobjekte eigen sind, als Funktion der erwähnten Quantifizierungsregeln.

Flux
Audio-
Visuel

Décodeur
Audio/Vidéo — 15

14

12

Composition
et rendu

Flux
BIFS

Interpréteur
BIFS — 13

11

Création de
la scène

16

Présentation
finale à
l'utilisateur

17

Interaction
Utilisateur

<u>Fig. 1</u>

DEFINITION :
NOEUD DE QUANTIFICATION — 21

23

CODAGE :
NOEUDS D'ANIMATION — 22

<u>Fig. 2</u>